# EUROPÄISCHE PATENTSCHRIFT

(11) **EP 1 764 250 B1**
(45) Veröffentlichungstag und Bekanntmachung des Hinweises auf die Patenterteilung: **09.06.2010**
(21) Anmeldenummer: 06018789.5
(22) Anmeldetag: 07.09.2006
(51) Int. Cl.: B60K 11/02, B62D 25/08, F16F 7/108, F28F 9/00

(54) **Kühlmodul für Kraftfahrzeug**
Cooling module for motor vehicle
Module de refroidissement pour vehicule à moteur

(30) Priorität: 16.09.2005 DE 102005044295
(43) Veröffentlichungstag der Anmeldung: 21.03.2007
(73) Patentinhaber: Behr GmbH & Co. KG, 70469 Stuttgart (DE)
(72) Erfinder: Assis, Mauro, 70435 Stuttgart (DE); Strese, Thomas, 70195 Stuttgart (DE)

(56) Entgegenhaltungen:
- FR-A- 1 181 260
- FR-A1- 2 801 655
- FR-A1- 2 841 973
- US-A- 4 821 828

## Beschreibung

Die Erfindung betrifft ein Kühlmodul, welches in einem Kraftfahrzeug abstützbar ist, mit mindestens einem Lager, mindestens einen Wärmeübertrager, einer Zarge und einem Kühlgebläse.

Kühlmodule für Kraftfahrzeuge sind bekannt als Baueinheiten, welche aus Wärmeübertragern wie Kühlmittelkühler, Kältemittelkondensator, Ladeluftkühler und/oder Ölkühler, aus einer Zarge oder einem Modulträger sowie einem Kühlgebläse bestehen. Kühlmodule werden vormontiert und als solche im Kraftfahrzeug, insbesondere im vorderen Bereich des Motorraumes eingebaut und mittels geeigneter Lager elastisch abgestützt. Bei der Befestigung eines Kühlmoduls im Kraftfahrzeug können sich Probleme bei der Verschraubung aufgrund schlechter Zugänglichkeit der Lagerstelle ergeben.

Die FR 2841973 offenbart ein Kühlmodul, bei welchem die Teile des Kühlmoduls mit Schnappverbindungen verbunden sind.

Das Kühlmodul umfasst dabei mindestens ein Lager, mindestens einen Wärmeübertrager, eine Zarge und ein Kühlgebläse, wobei das Lager ein elastisches Zwischenglied aufweist.

Es ist Aufgabe der vorliegenden Erfindung, ein Lager für ein Kühlmodul der eingangs genannten Art derart zu gestalten, dass eine einfache und schnelle Montage des Kühlmoduls im Kraftfahrzeug möglich ist.

Diese Aufgabe wird durch die Merkmale des Patentanspruches 1 gelöst. Vorteilhafte Ausgestaltungen der Erfindung ergeben sich aus den Unteransprüchen.

Erfindungsgemäß ist vorgesehen, dass das Lager an der Zarge befestigt bzw. Teil der Zarge ist und ein elastisches Zwischenglied aufweist, welches mit einer fahrzeugseitigen Lagerstelle verschraubbar ist. Das Zwischenglied ist als Gummibuchse ausgebildet, die in einem ringförmigen Topf, welcher ebenfalls einen Teil der Zarge bildet, aufgenommen ist. Vorteilhafterweise ist innerhalb des ringförmigen Topfes eine zentrale Durchstecköffnung angeordnet, welche vom Schraubbolzen durchsetzt wird, welcher das Lager mit Gummibuchse gegen eine fahrzeugseitige Lagerstelle verspannt. Die Verspannung erfolgt mittels einer Schraubmutter, welche formschlüssig in einer an der Zarge im Bereich der Durchtrittsöffnung angeordneten Tasche formschlüssig und unverlierbar aufgenommen ist. Die Schraubmutter ist somit in einem an die Zarge angespritzten Käfig gefangen. Dadurch ergibt sich der Vorteil, dass die Mutter bei der Montage des Kühlmoduls nicht von Hand am Lager positioniert und der Befestigungsbolzen in die Mutter eingeschraubt werden muss. Vielmehr muss die Schraube nur noch festgezogen und verspannt werden - dies verkürzt die Montagezeit.

Nach einer vorteilhaften Ausgestaltung der Erfindung ist in der Tasche bzw.. dem Käfig für die Mutter eine Rast- oder Schnappvorrichtung vorgesehen, welche die Mutter in ihrer Position hält und unverlierbar macht.

In weiterer vorteilhafter Ausgestaltung der Erfindung ist die fahrzeugseitige Lagerstelle als Lagerplatte mit einem offenen Schlitz ausgebildet. Diese Lösung hat den Vorteil, dass der Befestigungsbolzen bereits in die Mutter eingeschraubt ist und während der Montage in den Schlitz der fahrzeugseitigen Lagerplatte quer zur Schraubenlängsachse eingeführt werden kann. Dadurch ist eine schnelle Montage möglich. Vorteilhafterweise können zwei derartige Lager an gegenüber liegenden Seiten am Kühlmodul, d. h. an der Zarge vorgesehen sein. Die Zarge selbst hat darüber hinaus die Funktion, das Kühlgebläse in einer Befestigungsstruktur sowie Wärmeübertrager, z. B. einen Kühlmittelkühler und einen Kondensator aufzunehmen und zu halten.

Ein Ausführungsbeispiel der Erfindung ist in der Zeichnung dargestellt und wird im Folgenden näher beschrieben. Es zeigen
- Fig. 1: ein Kühlmodul mit Zarge und Lager,
- Fig. 2: das Lager in einer Ansicht,

- Fig. 2a: einen Ausschnitt des Lagers mit einer Tasche zur Mutterhalterung und
- Fig. 3: einen Schnitt durch das Lager.

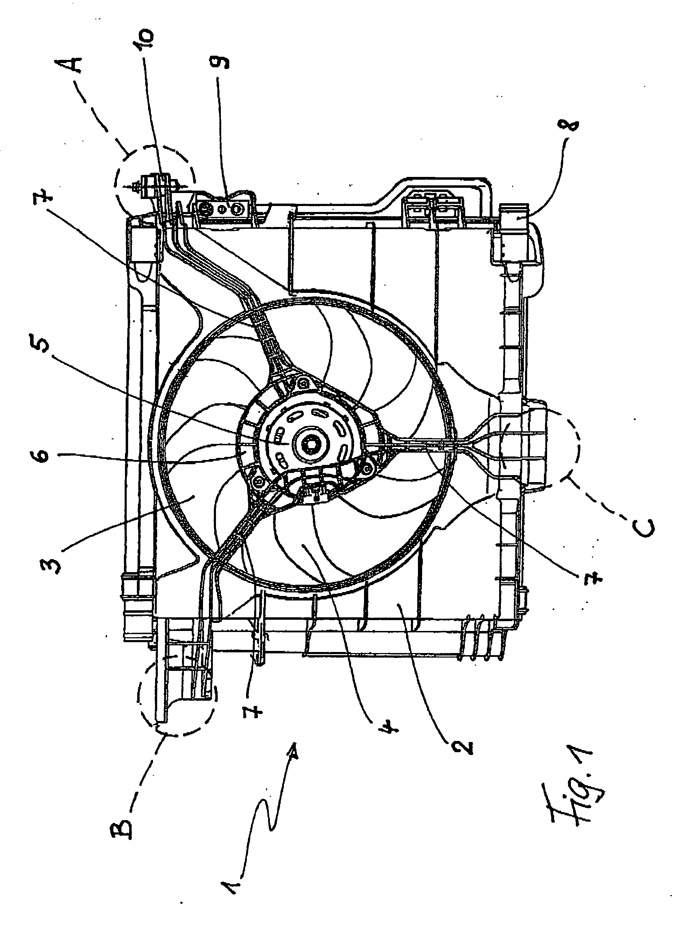

**Fig. 1** zeigt ein Kühlmodul 1, welches als Baueinheit zum Einbau in ein Kraftfahrzeug herstellbar ist. Das Kühlmodul 1 umfasst im Wesentlichen eine Zarge 2, welche als Träger verschiedener Komponenten und zur Abstützung im Fahrzeug dient. Die Zarge 2 weist eine kreisförmige Luftdurchtrittsöffnung 3 auf, innerhalb welcher ein Lüfter 4 umläuft, der von einem Elektromotor 5 angetrieben wird. Der Motor 5 ist in einer ringförmigen Befestigungsstruktur 6 aufgenommen, welche über drei Streben 7 mit der Zarge 2 verbunden ist. Die Zarge 2 nimmt ferner, was hier nicht genauer dargestellt ist, einen Kühlmittelkühler 8 sowie einen Kältemittelkondensator 9 auf, welche nur teilweise sichtbar sind. Das Kühlmodul 1 wird über drei schematisch dargestellte Lagerpunkte A, B, C gegenüber dem nicht dargestellten Fahrzeug abgestützt, wobei lediglich der Lagerpunkt A als Lager 10 im Folgenden näher dargestellt und erläutert wird. Das dem Lager A gegenüber liegende nicht sichtbare Lager B ist vorzugsweise ähnlich wie das Lager A ausgebildet, während das dritte Lager C im Wesentlichen als nicht dargestellte Abstützung des Kühlmoduls in und entgegen der Fahrtrichtung des Kraftfahrzeuges ausgebildet ist.

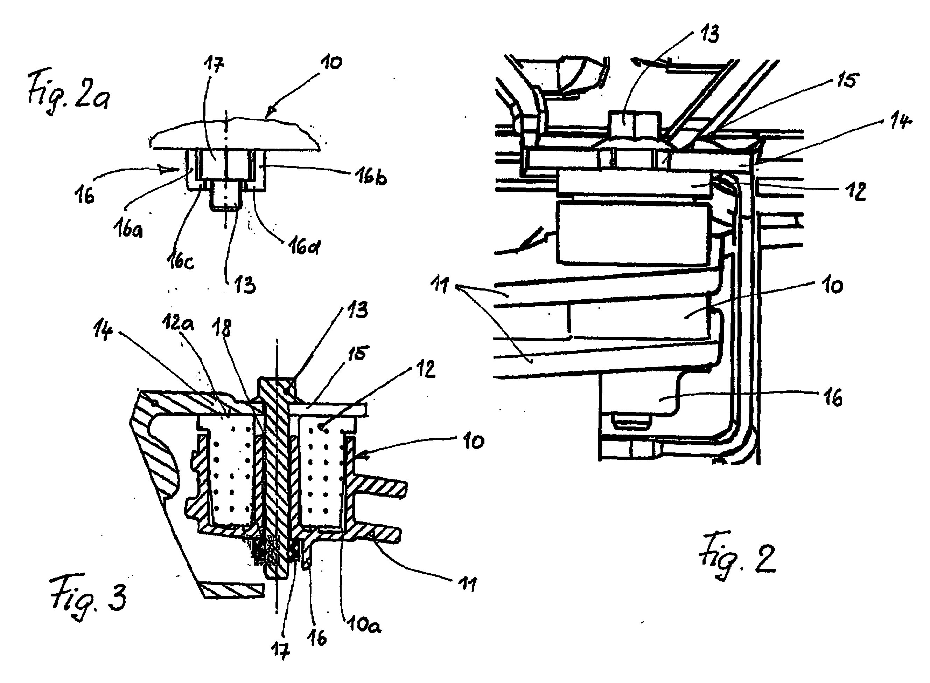

**Fig. 2** zeigt den Lagerpunkt A aus Fig. 1 in vergrößerter Darstellung als Lagertopf 10, der über einen verrippten Arm 11 mit der hier nicht dargestellten Zarge 2 verbunden und vorzugsweise als einstückiges Kunststoffspritzteil ausgebildet ist. In den Lagertopf 10 ist eine Gummibuchse 12 eingesetzt, welche von einem Schraubbolzen 13 durchsetzt wird. Der Lagertopf 10 ist gegenüber einer fahrzeugseitigen Lagerplatte 14 verspannt, welche einen nach außen offen Schlitz 15 zur Aufnahme des Schraubbolzens 13 aufweist. Der Lagertopf 10 weist an seinem in der Zeichnung unten gelegenen Bereich eine Tasche 16 auf, welche eine hier nicht sichtbare Schraubmutter aufnimmt, welche auf einem nicht dargestellten Gewinde des Schraubbolzens 13 läuft.

**Fig. 2a** zeigt die Tasche 16 als Ausschnitt in einer rückwärtigen Ansicht mit der Schraubmutter 17, welche formschlüssig in der Tasche 16 aufgenommen ist. Der Formschluss wird durch parallele Wände 16a, 16b der Tasche 16 bewirkt, welche an entsprechenden Mitnahmeflächen der Schraubmutter 17 (hier als Sechskantmutter ausgebildet) anliegen. Die Tasche 16 weist ferner untere Auflageflächen 16c, 16d auf, welche die Schraubmuter 17 umfassen und in Richtung der Schraubenlängsachse sichern. Die Tasche 16 weist schließlich eine hier nicht dargestellte Rastvorrichtung, z. B. in Form einer Rastnase auf den Auflageflächen 16c, 16d auf, welche die Mutter 17 am Herausfallen hindem.

**Fig. 3** zeigt einen Schnitt durch den Lagertopf 10 und die fahrzeugseitige Befestigungsplatte 14 gemäß Fig. 2. Der Lagertopf 10 weist einen (in der Zeichnung) nach oben offenen, ringförmigen Hohlraum 10a auf, in welchen die Gummibuchse 12 eingesetzt ist, welche mit ihrer aus dem Lagertopf 10 herausragenden Oberseite 12a an der Lagerplatte 14 zur Anlage kommt. Koaxial zu dem Ringraum 10a ist eine Durchstecköffnung 18 angeordnet, welche von dem Schraubbolzen 13 durchsetzt wird. Die Verspannung des Lagertopfes 10 gegenüber der fahrzeugseitigen Lagerplatte 14 erfolgt über den Schraubbolzen 13 mittels Befestigungsmutter 17 unter elastsicher Verspannung der Gummibuchse 12. Wie bereits erwähnt, ist die Befestigungsmutter 17 in der als Käfig ausgebildeten Tasche 16 unverlierbar und formschlüssig mit dem Lagertopf 10 verbunden. Die Montage des Lagertopfes 10 bzw. der mit dem Lagertopf 10 verbundenen Zarge 2 erfolgt in der Zeichnung von rechts nach links durch Hineinschieben des nach oben überstehenden Schraubbolzens 13 in den offenen Schlitz 15 der Lagerplatte 14. Anschließend erfolgt die Verspannung des Lagertopfes 10 durch Eindrehen des Befestigungsbolzens 13 in die formschlüssig in der Tasche 16 gehaltene Befestigungsmutter 17.

## Patentansprüche

1. Kühlmodul (1), welches in einem Kraftfahrzeug abstützbar ist, mit mindestens einem Lager, mindestens einem Wärmeübertrager (8, 9), einer Zarge (2) und einem Kühlgebläse (4, 5), wobei das Lager (10) an der Zarge (2) befestigt ist und ein elastisches Zwischenglied (12) aufweist, welches über einen Schraubbolzen (13) mit Mutter (17) gegenüber einer fahrzeugseitigen Lagerstelle (14) verspannbar ist, wobei das elastische Zwischenglied als Gummibuchse (12) ausgebildet und in einem ringförmigen Topf (10, 10a) der Zarge (2) aufgenommen ist.

2. Kühlmodul nach Anspruch 1, **dadurch gekennzeichnet, dass** der ringförmige Topf (10, 10a) eine zentrale Durchstecköffnung (18) für den Schraubbolzen (13) aufweist und dass am Ende der Durchstecköffnung (18) eine Tasche (16) zur formschlüssigen und unverlierbaren Aufnahme der Mutter (17) angeordnet ist.

3. Kühlmodul nach Anspruch 2, **dadurch gekennzeichnet, dass** die Mutter (17) parallele Mitnahmeflächen und die Tasche (16) parallele Seitenwände (16a, 16b) aufweist, welche die Mutter (17) am Verdrehen hindern.

4. Kühlmodul nach Anspruch 2 oder 3, **dadurch gekennzeichnet, dass** die Tasche (16) Auflageflächen (16c, 16d) zur Positionierung der Mutter (17) aufweist.

5. Kühlmodul nach Anspruch 2, 3 oder 4, **dadurch gekennzeichnet, dass** die Tasche (16) eine Vorrichtung zum Festhalten der Mutter (17), insbesondere eine Rast- oder Klemmvorrichtung aufweist.

6. Kühlmodul nach einem der Ansprüche 1 bis 5, **dadurch gekennzeichnet, dass** die fahrzeugseitige Lagerstelle als Lagerplatte (14) mit einem offenen Schlitz (15) zur seitlichen Einführung und zur Befestigung des Schraubbolzens (13) ausgebildet ist.

## Claims

1. A cooling module (1), which can be supported in a motor vehicle, comprising at least one mounting, at least one heat exchanger (8, 9), a frame (2), and a cooling fan (4, 5), wherein the mounting (10) is fastened to the frame (2) and comprises an elastic intermediate member (12), which can be tensioned with respect to a mounting point (14) on the vehicle side by way of a stud (13) having a nut (17), wherein the elastic intermediate member is designed as a rubber bushing (12) and received in an annular crucible (10, 10a) of the frame (2).

2. The cooling module according to claim 1, **characterized in that** the annular crucible (10, 10a) comprises a central through-hole (18) for the stud (13) and that a pocket (16) is disposed at the end of the through-hole (18) in order to receive the nut (17) in a form-fitted and captive manner.

3. The cooling module according to claim 2, **characterized in that** the nut (17) has parallel driving surfaces and the pocket (16) has parallel side walls (16a, 16b), which prevent the nut (17) from twisting.

4. The cooling module according to claim 2 or 3, **characterized in that** the pocket (16) has contact surfaces (16c, 16d) for positioning the nut (17).

5. The cooling module according to claim 2, 3 or 4, **characterized in that** the pocket (16) comprises a device for retaining the nut (17), in particular a detent or clamping device.

6. A cooling module according to any one of claims 1 to 5, **characterized in that** the mounting point on the vehicle side is designed as a mounting plate (14) having an open slit (15) for laterally inserting and fastening the stud (13).

## Revendications

1. Module de refroidissement (1) qui, dans un véhicule automobile, est supporté par au moins un support, au moins un échangeur de chaleur (8, 9), un châssis (2) et une soufflante de refroidissement (4, 5), où le support (10) est fixé sur le châssis (2) et présente un élément intermédiaire élastique (12) qui, par rapport à un point d'appui (14), côté véhicule, peut être tendu par un boulon fileté (13) comportant un écrou (17), où l'élément intermédiaire élastique est configuré comme un coussinet en caoutchouc (12) et logé dans un pot (10, 10a), de forme annulaire, du châssis (2).

2. Module de refroidissement selon la revendication 1, **caractérisé en ce que** le pot (10, 10a), de forme annulaire, présente une ouverture d'insertion centrale (18) prévue pour le boulon fileté (13), et **en ce qu'**une poche (16) servant au logement, à complémentarité de forme et imperdable, de l'écrou (17) est disposée au niveau de l'extrémité de l'ouverture d'insertion (18).

3. Module de refroidissement selon la revendication 2, **caractérisé en ce que** l'écrou (17) présente des faces d'entraînement parallèles et, la poche (16), des parois latérales parallèles (16a, 16b) qui empêchent l'écrou (17) de tourner.

4. Module de refroidissement selon la revendication 2 ou 3, **caractérisé en ce que** la poche (16) présente des surfaces d'appui (16c, 16d) servant au positionnement de l'écrou (17).

5. Module de refroidissement selon la revendication 2, 3 ou 4, **caractérisé en ce que** la poche (16) présente un dispositif servant à retenir l'écrou (17), en particulier un dispositif à encliquetage ou de serrage.

6. Module de refroidissement selon l'une quelconque des revendications 1 à 5, **caractérisé en ce que** le point d'appui, côté véhicule, est configuré comme une plaque d'appui (14) comportant une fente ouverte (15) servant à l'introduction latérale et à la fixation du boulon fileté (13).
